# EUROPÄISCHE PATENTANMELDUNG

(11) **EP 0 911 436 A1**
(43) Veröffentlichungstag der Anmeldung: **28.04.1999**
(21) Anmeldenummer: 98890299.5
(22) Anmeldetag: 15.10.1998
(51) Int. Cl.: D03C 3/42, D03J 1/00, F16G 11/04

(54) **Vorrichtung zum Ankuppeln eines Fadens, insbesondere eines Webfadens**

(30) Priorität: 24.10.1997 AT 1804/97
(71) Anmelder: WIS Engineering GmbH & Co.KG, 4850 Timelkam (AT)
(72) Erfinder: Berger, Franz, 4872 Neukirchen (AT)
(74) Vertreter: Hübscher, Heiner, Dipl.-Ing.

(57) **Zusammenfassung**

Es wird eine Vorrichtung zum Ankuppeln eines Fadens, insbesondere eines Webfadens, an eine Spanneinrichtung mit einer Klemmhülse (1) und einem in der Klemmhülse (1) axial verstellbaren Klemmkörper (2) beschrieben, der an seinem einen über die Klemmhülse (1) axial vorragenden Ende an die Spanneinrichtung anschließbar ist und im Bereich seines anderen Endes einen Klemmteil für das Fadenende (7) bildet. Um vorteilhafte Konstruktionsbedingungen zu schaffen, wird vorgeschlagen, daß die Klemmhülse (1) auf der der Anschlußseite der Spanneinrichtung gegenüberliegenden Seite eine stimseitige Einführöffnung (6) für den Faden bildet und einen sich gegen diese Einführöffnung (6) erweiternden Klemmabschnitt (5) aufweist, zwischen dem und dem in die Klemmhülse (1) eingezogenen, als Klemmkopf (4) ausgebildeten Klemmteil des Klemmkörpers (2) das in die Klemmhülse (1) eingeführte Fadenende (7) festklemmbar ist.

## Beschreibung

Die Erfindung bezieht sich auf eine Vorrichtung zum Ankuppeln eines Fadens, insbesondere eines Webfadens, an eine Spanneinrichtung mit einer Klemmhülse und einem in der Klemmhülse axial verstellbaren Klemmkörper, der an seinem einen über die Klemmhülse axial vorragenden Ende an die Spanneinrichtung anschließbar ist und im Bereich seines anderen Endes einen Klemmteil für das Fadenende bildet.

Um einen Webfaden an eine Spanneinrichtung lösbar anschließen zu können, sind Kupplungsvorrichtungen bekannt, die im wesentlichen aus einer Klemmhülse bestehen, die von einem Bügel aus Federdraht durchsetzt wird, und zwar in der Art und Weise, daß sich zu beiden Seiten der Klemmhülse Aufnahmeösen ergeben. Über die eine Aufnahmeöse erfolgt der Anschluß an die Spanneinrichtung. Die andere Öse wirkt als Klemmöse für das anzukuppelnde Fadenende, das in die aus der klemmhülse vorragende Öse eingeführt und durch ein Verschieben der Klemmhülse geklemmt wird, weil die Öse ähnlich einer Schlinge in die Klemmhülse eingezogen wird. Nachteilig bei diesen bekannten Kupplungsvorrichtungen ist allerdings, daß die erforderliche Klemmkraft nur dann sichergestellt werden kann, wenn das zu klemmende Fadenende einen Durchmesser aufweist, der in einen vergleichsweise begrenzten Toleranzbereich fällt. Abgesehen davon sind solche Kupplungsvorrichtungen aufgrund des Federdrahtbügels bruchanfällig. Außerdem steht das freie Ende des geklemmten Fadens über die Öse vor, was zu Störungen Anlaß geben kann, insbesondere wenn mehrere solcher Kupplungen mit geringem seitlichen Abstand nebeneinander angeordnet werden müssen.

Der Erfindung liegt somit die Aufgabe zugrunde, eine Vorrichtung der eingangs geschilderten Art zum Ankuppeln eines Fadens, insbesondere eines Webfadens, an eine Spanneinrichtung mit einfachen konstruktiven Mitteln so auszugestalten, daß eine betriebssichere Fadenklemmung für einen weiten Durchmesserbereich der zu klemmenden Fäden sichergestelt werden kann.

Die Erfindung löst die gestellte Aufgabe dadurch, daß die Klemmhülse auf der der Anschlußseite der Spanneinrichtung gegenüberliegenden Seite eine stimseitige Einführöffnung für den Faden bildet und einen sich gegen diese Einführöffnung erweiternden Klemmabschnitt aufweist, zwischen dem und dem in die Klemmhülse eingezogenen, als Klemmkopf ausgebildeten Klemmteil des Klemmkörpers das in die Klemmhülse eingeführte Fadenende festklemmbar ist.

Da die Klemmhülse einen sich gegen eine stimseitige Einführöffnung für das Fadenende erweiternden Klemmabschnitt aufweist und der Klemmkörper einen in diesen Klemmabschnitt einziehbaren Klemmkopf bildet, hängt die Weite des sich zwischen dem Klemmkopf und dem Klemmabschnitt ergebenden Spaltes von der Einziehlänge des Klemmkopfes in den Klemmabschnitt der Klemmhülse ab. Dies bedeutet, daß bis zu einem Fadendurchmesser, der der Differenz der größten Durchmesser einerseits der lichten Weite des Klemmabschnittes der Klemmhülse und anderseits des Klemmkopfes des Klemmkörpers entspricht, alle Fäden mit einem kleineren Durchmesser zwischen dem Klemmkopf und dem Klemmabschnitt der Klemmhülse festgeklemmt werden können. Zu diesem Zweck braucht lediglich der Klemmkörper mit dem Klemmkopf gegen die Einführöffnung der Klemmhülse vorgeschoben zu werden, um das zu klemmende Fadenende durch die stirnseitige Einführöffnung der Klemmhülse zwischen dieser und dem Klemmkörper in den Klemmabschnitt der Klemmhülse einführen zu können, so daß nach einem Einziehen des Klemmkopfes das Fadenende zwischen dem Klemmkopf und dem Klemmabschnitt festgeklemmt wird. Zum Lösen dieser Klemmverbindung braucht lediglich der Klemmkopf gegenüber der Klemmhülse gegen die Einführöffnung vorgeschoben zu werden, was eine sehr einfache Handhabung ergibt. Da außerdem das zu klemmende Fadenende in die Klemmhülse eingeführt wird, können Betriebsstörungen durch von der Kupplungsvorrichtung abstehende Fadenenden ausgeschlossen werden.

Obwohl es lediglich darauf ankommt, eine gegenüber der Verstellrichtung des Klemmkopfes geneigte Klemmfläche im Bereich des Klemmabschnittes der Klemmhülse vorzusehen, was beispielsweise durch einen sich keilförmig erweiternden Klemmabschnitt sichergestellt werden kann, ergeben sich besonders einfache Konstruktionsverhältnisse, wenn sich der Klemmabschnitt der Klemmhülse gegen die Einführöffnung hin konisch erweitert, weil in diesem Fall nicht nur eine einfache Form für die Klemmhülse, sondern auch für den Klemmkopf erreicht werden kann. Der Klemmkopf kann unter diesen Bedingungen als Rotationskörper ausgebildet sein und beispielsweise aus einer Kugel bestehen. Da der Klemmkörper mit radialem Spiel innerhalb der Klemmhülse axial verschiebbar geführt wird, legt sich der Klemmkopf auf der dem eingeführten Fadenende gegenüberliegenden Seite an den Klemmabschnitt der Klemmhülse an, so daß sich zwischen dem Klemmabschnitt und dem Klemmkopf ein sichelförmiger Spalt einstellt, der mit dem Einziehen des Klemmkopfes in den sich konisch verjüngenden Klemmabschnitt verengt wird, bis das Fadenende zwischen dem Klemmkopf und dem Klemmabschnitt der Klemmhülse festgeklemmt ist. Durch eine entsprechende Wahl des Öffnungswinkels des konischen Klemmabschnittes kann für den geklemmten Faden ohne weiteres eine Selbsthemmung erreicht werden, die verhindert, daß auch bei höheren Zugbelastungen des Fadens das Fadenende aus der Klemmhülse gezogen wird.

Um die Handhabung beim Ankuppeln des Fadens zusätzlich zu erleichtern, kann der Klemmkopf des Klemmkörpers durch die Einführöffnung aus der Klemmhülse ausschiebbar sein, so daß für das Einführen des Fadenendes in die Klemmhülse die Einführöffnung durch den Klemmkopf freigegeben wird. Es entfallen daher Einfädelvorgänge, die ein besonderes Geschick von einer die Kupplungsvorrichtung bedienenden Person verlangen.

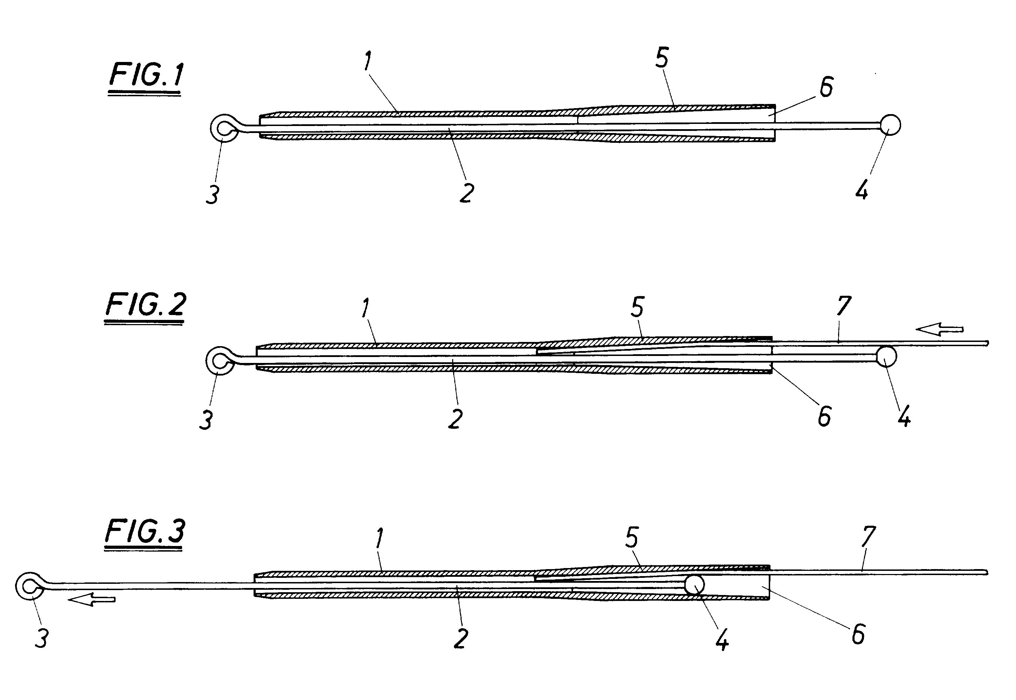

In der Zeichnung ist der Erfindungsgegenstand beispielsweise dargestellt, und zwar wird in den
- Fig. 1 bis 3: eine erfindungsgemäße Vorrichtung zum Ankuppeln eines Webfadens an eine Spanneinrichtung in einem Axialschnitt in verschiedenen Stellungen gezeigt.

Die dargestellte Vorrichtung zum Ankuppeln eines Webfadens an eine Spanneinrichtung besteht gemäß dem dargestellten Ausführungsbeispiel im wesentlichen aus einer Klemmhülse 1 und einem in der Klemmhülse 1 mit radialem Spiel axial verschiebbar geführten Klemmkörper 2, der an seinem einen Ende eine Anschlußöse 3 für eine Spanneinrichtung bildet. Am gegenüberliegenden Ende des vorzugsweise aus einem Draht gebildeten Klemmkörpers 2 ist ein Klemmkopf 4 vorgesehen, der gemäß dem Ausführungsbeispiel als Kugelkopf ausgebildet ist. Dieser Klemmkopf 4 wirkt mit einem Klemmabschnitt 5 der Klemmhülse 1 zusammen, der sich gegen eine stimseitige Einführöffnung 6 für ein zu klemmendes Fadenende 7 konisch erweitert. Da der größte Durchmesser der konischen Erweiterung des Klemmabschnittes 5 im Bereich der Einführöffnung 6 entsprechend größer und der kleinste Durchmesser dieser konischen Erweiterung kleiner als der Durchmesser des Klemmkopfes 4 ist, kann jeder Faden, dessen Durchmesser kleiner als die Differenz des größten Durchmessers des Klemmabschnittes 5 und des Klemmkopfes 4 ist, sicher zwischen dem in die Klemmhülse 1 eingezogenen Klemmkopf 4 und dem Klemmabschnitt 5 der Klemmhülse 1 festgeklemmt werden.

In den Fig. 2 und 3 ist der Klemmvorgang näher dargestellt. Zum Einfädeln des Fadenendes 7 durch die Einführöffnung 6 der Klemmhülse 1 wird der Klemmkörper 2 mit dem Klemmkopf 4 gegen die Einführöffnung 6 der Kemmhülse 1 vorgeschoben, bis der Klemmkopf 4 aus der Klemmhülse 1 vorragt, wie dies in der Fig. 1 veranschaulicht ist. Das Fadenende 7 kann daher durch die vom Klemmkopf 4 freigegebene Einführöffnung 6 in den Klemmabschnitt 5 der Klemmhülse 1 eingeführt werden, wie dies die Fig. 2 zeigt. Wird dann der Klemmkörper 2 gegenüber der Klemmhülse 1 axial so verstellt, daß der Klemmkopf 4 in den Klemmabschnitt 5 der Klemmhülse 1 eingezogen wird, so wird das in den Klemmabschnitt 5 ragende Fadenende 7 durch den Klemmkopf 4 gegen den Klemmabschnitt 5 der Klemmhülse 1 angedrückt, wobei sich der Klemmkopf 4 auf der dem Fadenende 7 gegenüberliegenden Seite an der Wandung des Klemmabschnittes 5 abstützt. Der Fig. 3 ist diese Klemmstellung zu entnehmen, in der das Fadenende 7 zwischen dem in die Klemmhülse 1 eingezogenen Klemmkopf 4 und dem Klemmabschnitt 5 der Klemmhülse 1 selbsthemmend festgeklemmt wird. Zum Lösen dieser Klemmverbindung muß der Klemmkopf 4 lediglich aus der Klemmhülse 1 ausgestoßen werden, wobei das Fadenende 7 freigegeben wird.

Es brauch wohl nicht besonders hervorgehoben zu werden, daß die Fadenklemmung zwischen dem Klemmkopf 4 und dem sich in Einziehrichtung des Klemmkopfes 4 verjüngenden Klemmabschnitt 5 der Klemmhülse 1 unabhängig von der Querschnittsform des Fadens und auch davon ist, ob das zu klemmende Fadenende im wesentlichen gerade verläuft oder z. B. mehrfach gekröpft ist.

## Patentansprüche

1. Vorrichtung zum Ankuppeln eines Fadens, insbesondere eines Webfadens, an eine Spanneinrichtung mit einer Klemmhülse (1) und einem in der Klemmhülse (1) axial verstellbaren Klemmkörper (2), der an seinem einen über die Klemmhülse (1) axial vorragenden Ende an die Spanneinrichtung anschließbar ist und im Bereich seines anderen Endes einen Klemmteil für den Faden bildet, dadurch gekennzeichnet, daß die Klemmhülse (1) auf der der Anschlußseite der Spanneinrichtung gegenüberliegenden Seite eine stimseitige Einführöffnung (6) für den Faden bildet und einen sich gegen diese Einführöffnung (6) erweiternden Klemmabschnitt (5) aufweist, zwischen dem und dem in die Klemmhülse (1) eingezogenen, als Klemmkopf (4) ausgebildeten Klemmteil des Klemmkörpers (2) das in die Klemmhülse (1) eingeführte Fadenende (7) festklemmbar ist.

2. Vorrichtung nach Anspruch 1, dadurch gekennzeichnet, daß der Klemmabschnitt (5) der Klemmhülse (1) sich gegen die Einführöffnung (6) konisch erweitert.

3. Vorrichtung nach Anspruch 1 oder 2, dadurch gekennzeichnet, daß der Klemmkopf (4) des Klemmkörpers (2) kugelförmig ausgebildet ist.

4. Vorrichtung nach einem der Ansprüche 1 bis 3, dadurch gekennzeichnet, daß der Klemmkopf (4) des Klemmkörpers (2) durch die Einführöffnung (6) aus der Klemmhülse (1) ausschiebbar ist.
